# EUROPEAN PATENT APPLICATION

(11) **EP 3 132 838 A1**
(43) Date of publication of application: **22.02.2017**
(21) Application number: 15809909.3
(22) Date of filing: 16.06.2015
(51) Int. Cl.: B01D 39/16, B01D 33/06, B63B 13/00, C02F 1/32

(54) **PLEATED FILTER CARTRIDGE, BALLAST WATER TREATMENT DEVICE USING SAME, AND BALLAST WATER TREATMENT METHOD**

(30) Priority: 17.06.2014 JP 2014124109
(71) Applicant: Sumitomo Electric Industries, Ltd., Osaka-shi, Osaka 541-0041 (JP)
(72) Inventor: YAHAGI, Satoshi, Osaka-shi Osaka 554-0024 (JP); KANAZAWA, Shinichi, Osaka-shi Osaka 554-0024 (JP); UEYAMA, Munetsugu, Osaka-shi Osaka 554-0024 (JP); INOUE, Hiroki, Osaka-shi Osaka 554-0024 (JP)
(74) Representative: Boult Wade Tennant
(86) International application number: PCT/JP2015/067287
(87) International publication number: WO 2015/194542

(57) **Abstract**

A pleated filter cartridge includes a pleated filter that includes a filter base having folds that repeatedly form mountains and valleys and having a tubular shape whose axial direction is a ridge line direction of the folds, and fixing members disposed on an upper bottom portion and a lower bottom portion of the pleated filter. The pleated filter includes a reinforcing structure for folds in the mountains which are projecting portions projecting toward the outside of the tubular shape. The reinforcing structure includes both a resin-reinforcing structure including, as a reinforcing body, a resin that covers a surface of the base in the folds or a resin that is allowed to permeate in the base in the folds, and a member-reinforcing structure in which reinforcing members provided separately from the filter base are disposed so as to extend along the folds.

## Description

### Technical Field

The present invention relates to a structure of a pleated filter that is mainly used for filtration of a liquid. In particular, the present invention relates to a pleated filter used in a treatment system of ballast water stored in ships and used for filtration of a large amount of water, and a device using the same.

### Background Art

A wide variety of filters are used for the purpose of separating and removing a solid, which is a contaminant, from a gas or a liquid. Pleated filters whose filtration areas are increased by folding a filter so as to have a pleated shape are also used mainly in applications involving a gas, for example, in an air purification system. PTL 1 discloses an example of the use of a cylindrically shaped pleated filter as a filter device for removing sludge from a cutting fluid of a machine tool. Regarding this device, it is described that a filter device having a high cleaning effect of a filter can be provided by ejecting a liquid toward an outer surface of a cylindrical filter while rotating the filter.

In recent years, treatment of ballast water carried in ships has become an issue. Ballast water is seawater carried in a ship to provide safe voyage even when the ship is empty of cargo. Various methods for removing, killing, or inactivating microbes by purifying ballast water have been developed. Methods using filtration for the purpose of removing relatively large microbes have also been developed. For example, PTL 2 describes a ballast water treatment device using a filter membrane, the device being filed by the applicant of the present invention. PTL 3, which also relates to an invention filed by the applicant of the present invention, describes that splitting or the like of valleys of a pleated filter may cause a problem and discloses means for reinforcing the pleated filter.

### Citation List

### Patent Literature

PTL 1: Japanese Unexamined Patent Application Publication No. 2008-93783
PTL 2: Japanese Patent No. 4835785
PTL 3: Japanese Unexamined Patent Application Publication No. 2012-245428

### Summary of Invention

### Technical Problem

In the case of seawater desalination, the use of brackish water/seawater for purposes such as ballast water, or the treatment of water such as sewage water, human sewage, or industrial wastewater, a preliminary filtration treatment for removing foreign matter, contaminants, and microbes in the water is necessary. The inventors of the present invention have been examining the application of a pleated filter to such filtration. In this case, it is necessary to filter a large amount of water in the shortest possible time. However, in general, the operation at a large scale/high flow rate causes a technical problem in that a decrease in the amount of treatment or the filtration function due to clogging at an early stage tends to occur.

The device disclosed in PTL 2 is a filtering device in which a cylindrical filter is installed in a tubular case and a liquid that is allowed to flow from the outside to the inside of the cylindrical filter is collected as a filtrate. A liquid to be filtered is ejected from a nozzle provided on a side face of the tubular case onto a part of a filtering surface of the filter. Filtered products deposited on a surface of the filter are washed to recover the permeation flux, and the filtered products that have been washed out are discharged from a filtration front chamber. With this structure, a stable filtration state is continuously maintained. An important factor for stably maintaining continuous filtration of such a system is the cleaning effect obtained by ejecting the unfiltered liquid onto the filtering surface of the filter. In order to efficiently and effectively clean the entire filter by changing a cleaning region of the filter with time, the cylindrical filter is rotated during filtration by driving a motor or the like, thus continuously and periodically changing the position to which the ejection of the unfiltered liquid from the ejection nozzle is applied to the filtering surface of the filter. In order to reliably perform this rotation cleaning and to stably maintain a high filtration flow rate, the ejection of the unfiltered liquid from the nozzle needs to be maintained at a certain high flow rate level or more. According to the studies conducted by the inventors, it was found that, as a result of being subjected to ejection of the unfiltered liquid at such a high flow rate, the cylindrical filter degrades with time and a failure occurs, and part of the unfiltered liquid may be mixed directly with the filtrate without passing through the filter.

As described in PTL 3, the applicant of the present invention has been focusing that a failure occurs in a valley. The applicant of the present invention assumes that the failure occurs due to the following mechanism. Specifically, force is applied to a valley in a direction in which a fold in the valley opens up, and a tensile stress is concentrated at a filter base. In view of this, the applicant of the present invent has examined means for reinforcing valleys. However, it is found that even if the valleys are reinforced, a failure may occur during a long-time operation.

Accordingly, an object of the present invention is to provide a pleated filter and a pleated filter cartridge whose degradation and failure due to use are prevented and which can be stably used for a long period of time, a ballast water treatment device functioning as a filtering device using the pleated filter or the pleated filter cartridge, and a ballast water treatment method using the same.

### Solution to Problem

As a result of intensive studies on degradation of a filter, the inventors of the present invention confirmed a phenomenon in which a failure occurs in a folded portion corresponding to the mountain side of pleats of a filter that has been subjected to ejection of an unfiltered liquid at a high flow rate, and arrived at the following configurations.

Specifically, a pleated filter includes a filter base having folds that repeatedly form mountains and valleys and having a tubular shape whose axial direction is a ridge line direction of the folds, in which the pleated filter includes a reinforcing structure for folds in the mountains which are projecting portions projecting toward the outside of the tubular shape. A pleated filter cartridge includes a pleated filter that includes a filter base having folds that repeatedly form mountains and valleys and having a tubular shape whose axial direction is a ridge line direction of the folds; and fixing members disposed on an upper bottom portion and a lower bottom portion of the pleated filter, in which the pleated filter includes a reinforcing structure for folds in the mountains which are projecting portions projecting toward the outside of the tubular shape, and the reinforcing structure includes both a resin-reinforcing structure including, as a reinforcing body, a resin that covers a surface of the base in the folds or a resin that is allowed to permeate in the base in the folds, and a member-reinforcing structure in which reinforcing members provided separately from the filter base are disposed so as to extend along the folds.

The present invention discloses a ballast water treatment device including the pleated filter or the pleated filter cartridge used for filtration, a top surface of a cylinder and a bottom surface of the cylinder of the pleated filter each being sealed in a watertight manner, the pleated filter being rotatably held about a cylindrical axis; an untreated-water nozzle that ejects untreated water toward an outer circumferential surface of the pleated filter; a case that includes an outer tubular portion provided so as to surround the pleated filter and including a nozzle opening of the untreated-water nozzle therein; a filtered-water flow path that leads filtered water having passed through the pleated filter from the inside of the cylinder of the pleated filter to the outside of the case; and a discharge flow path that discharges discharge water that is not filtered by the pleated filter to the outside of the case.

The present invention further discloses a method for treating ballast water, the method including installing the ballast water treatment device in a hull; using, as untreated water, seawater taken from the outside of the hull; further applying a sterilization treatment to filtered water treated by the ballast water treatment device; and subsequently storing the resulting water in the hull as ballast water.

### Advantageous Effects of Invention

It is possible to provide a pleated filter and a pleated filter cartridge whose breakage due to use is prevented, thereby contributing to stable use for a long period of time, and a ballast water treatment device using the pleated filter or the pleated filter cartridge.

### Brief Description of Drawings

[Fig. 1] Figure 1 is a perspective schematic view illustrating a typical structural example of a pleated filter.
[Fig. 2] Figure 2 is a partially enlarged view of a transverse section of the pleated filter in Fig. 1.
[Fig. 3A] Figure 3A is a view illustrating a part of the pleated filter in Fig. 1, viewed from a side face, and is a view that schematically illustrates a state before bending occurs.
[Fig. 3B] Figure 3B is a view illustrating a part of the pleated filter in Fig. 1, viewed from a side face, and is a view that schematically illustrates a state of bending, which may cause a failure.
[Fig. 4] Figure 4 is an enlarged schematic view illustrating, as an example of a reinforcing structure, a folded portion reinforced with a resin.
[Fig. 5] Figure 5 is a schematic view illustrating, as an example of a reinforcing structure, another embodiment of a folded portion reinforced with a resin.
[Fig. 6] Figure 6 is a schematic view illustrating, as an example of a reinforcing structure, another embodiment of a folded portion reinforced with a resin.
[Fig. 7] Figure 7 is an enlarged schematic view of a folded portion of a pleated filter.
[Fig. 8] Figure 8 is a schematic view illustrating, as an example of a reinforcing structure, another embodiment of a folded portion reinforced with a resin.
[Fig. 9] Figure 9 is a perspective schematic view illustrating an example of the structure of a pleated filter including reinforcing sheets, which are an embodiment of a reinforcing structure.
[Fig. 10] Figure 10 is a schematic enlarged top view illustrating a part of the pleated filter in Fig. 9.
[Fig. 11] Figure 11 is a schematic side view illustrating a fixing structure of the pleated filter in Fig. 9.
[Fig. 12] Figure 12 is a perspective view illustrating the structure of a mesh sheet which is an example of a reinforcing sheet.
[Fig. 13] Figure 13 is an enlarged, sectional schematic view illustrating, as an example of a combination of reinforcing structures, a structure in which a resin-reinforcing structure is provided in a fold in a mountain M, and a reinforcing sheet serving as a reinforcing member is provided on the back side of the mountain.
[Fig. 14] Figure 14 is an enlarged, sectional schematic view illustrating, as an example of a combination of reinforcing structures, a structure in which a resin-reinforcing structure is provided in each of folds in mountains M, a reinforcing sheet serving as a reinforcing member is provided on the back side of each of the mountains, and the resin-reinforcing structure is further provided in each of folds in valleys V.
[Fig. 15] Figure 15 is an enlarged, top schematic view illustrating another example of the structure of a pleated filter including reinforcing sheets, which are an embodiment of a reinforcing structure.
[Fig. 16] Figure 16 is a view illustrating an example of a filter base subjected to an embossing process.
[Fig. 17] Figure 17 is a perspective schematic view illustrating a typical example of the structure of a pleated filter cartridge.
[Fig. 18] Figure 18 is a view illustrating an example of a ballast water treatment device according to an embodiment of the present invention and is a sectional schematic view illustrating the structure of a vertical section including an axis line.
[Fig. 19] Figure 19 is a schematic view illustrating the structure of a horizontal A-A section in Fig. 18.
[Fig. 20] Figure 20 is a diagram illustrating an example of the overall structure of a ballast water treatment system using a ballast water treatment device according to an embodiment of the present invention.
[Fig. 21] Figure 21 is a graph showing lifetime estimation results obtained by the Weibull plot.

### Reference Signs List

- 1, 11: base
- 2: resin
- 3: resin sheet
- 10, 101: pleated filter
- 12, 13: fixing member
- 20, 22: reinforcing sheet
- 51: tank
- 53: filtering device
- 54: sterilization means
- 52: pump
- 31,32,33,34,35,36: pipe
- 102: untreated-water nozzle
- 103: case
- 106: untreated-water flow path
- 107: filtered water flow path
- 108: discharge flow path
- 121: nozzle opening
- 131: outer tubular portion
- 132: lid portion
- 133: bottom portion
- 140: central pipe
- 141: water intake hole
- 190: motor

### Description of Embodiments

### [Description of embodiments of present invention]

Embodiments of the present invention will now be listed and described.

An embodiment disclosed in the present invention is a pleated filter that includes a filter base having folds that repeatedly form mountains and valleys and having a tubular shape whose axial direction is a ridge line direction of the folds, in which the pleated filter includes a reinforcing structure for folds in the mountains which are projecting portions projecting toward the outside of the tubular shape. In other words, the pleated filter has a ring shape as a whole while ridge lines of the folds alternately form a plurality of mountains and valleys in parallel. The pleated filter can be used for filtration from the outside to the inside or from the inside to the outside of the tubular shape.

Herein, the term "reinforcement" refers to a reduction in the occurrence of breakage generated in a fold of a filter base, that is, an increase in the strength against breakage. The term "reinforcement" is not used in the meaning of an increase in mechanical strength of the filter base itself or the meaning of an increase in mechanical strength of the whole pleated filter functioning as a structure. In this sense, the reinforcing structure is distinguished from a bone structure and a frame that are used in order to maintain the shape of the filter when the filter base is formed of a very thin film or the like. The term "breakage" refers to a split or a fine hole formed in a filter base, and refers to such damage that the original filtration function is impaired and substances that should be removed by filtration pass through the filter base. The term "reinforcing structure" refers to a structure for performing reinforcement in general and may also refer to "reinforcing means" or "reinforcing portion". The term "reinforcing structure" is a generic term representing a structure that reduces or prevents breakage, and refers to a structure added to a filter in order to reduce the generation of such breakage, a process of a filter base, a combination thereof, and a reinforcing portion including a filter base.

In a pleated filter, stress or a stress change is applied to folds, which are folded portions of pleats, by a pressure of a fluid to be filtered or a change in the pressure. In particular, when the fluid to be filtered is a liquid such as water, the pressure applied to a filter is higher than that in the case of a gas such as air. Therefore, folds are deformed, and breakage easily occurs. Even in the case where a pleated filter is used in a state in which uniform pressure is applied to the whole pleated filter, the pressure is concentrated at folds. Furthermore, when the pressure varies, the folds are easily deformed, and the possibility of breakage may increase. According to experiments conducted by the inventors, it was confirmed that breakage easily occurs in folds, which form mountains and valleys. It was also found that the behaviors of the folds are different, and conditions under which breakage occurs are also different between a mountain and a valley.

Mountains and valleys will now be described under the assumption of the case where a liquid to be filtered is supplied from the outside of a tube, and a liquid filtered by the base of a filter is discharged from the inside of the tube. When the direction of the flow of the liquid to be filtered (unfiltered liquid) is reversed, the mountains become the valleys, and vice versa. Specifically, a fold whose surface on the side that receives a flow of a liquid to be filtered (surface that comes in contact with a liquid to be filtered) is on the mountain side is referred to as a mountain. In contrast, a fold whose surface on the side that receives a flow of a liquid to be filtered is on the valley side is referred to as a valley. If the filter does not have a tubular shape but has a flat-plate shape, regarding the reinforcement, the definition may be construed in accordance with the direction of the filtration.

When the liquid to be filtered comes into the inside of pleats, the width of the pleats expands. As a result of this movement, a flow of the liquid to be filtered is generated in the pleats, and the filter in the pleats is sufficiently cleaned. At this time, a force is applied, by the pressure of the liquid to be filtered, to a valley in a direction in which the fold opens up. Furthermore, since the bending angle of the folded portion is changed (that is, the pleat is opened up and closed) by a change in the pressure, the possibility of breakage of the valley is increased by the tensile stress and repetitive bending.

On the other hand, stress is applied to a mountain in a direction in which the fold is closed by the stress of the liquid to be filtered. Accordingly, unlike a valley, stress in a direction in which the fold opens up is unlikely to be applied to a mountain. Therefore, it is believed that breakage due to the same mechanism is unlikely to occur. In mountains, when the stress of the liquid to be filtered is concentrated at one mountain or a gap between mountains among a plurality of mountains that are continuously arranged, force is applied in a direction in which the mountains become separated. Upper and lower ends of the folds are fixed as a whole pleated filter. Therefore, when mountains are moved so as to be separated from each other, a tension is applied to ridge lines of the mountains, and a deformation easily occurs in which the ridge lines of the mountains are sharply bent near the center. Breakage tends to occur in such bent portions.

In order to prevent such breakage, by providing a reinforcing structure, the occurrence of filtration defects can be reduced, the strength of the pleated filter is increased to extend the lifetime, and a long-term operation of the filtering device can be further realized. Regarding the filtering device, the operating cost including components and work necessary for changing a filter can be reduced. Furthermore, the amount of filtration and the filtration rate of the filtering device can be improved.

An embodiment of the reinforcing structure is a resin-reinforcing structure including, as a reinforcing body, a resin that covers a surface of the base in the folds or a resin that is allowed to permeate in the base in the folds. The possibility of breakage can be reduced by combining a resin material, which is less likely to be broken, with the filter base. This structure is particularly effective when a fibrous base such as a non-woven cloth is used as a filter base. In particular, a structure in which a resin is allowed to permeate in the filter base achieves a more significant effect.

A non-woven cloth such as a polyethylene terephthalate non-woven cloth is particularly preferably used as the filter base. In a microscopic view, a filter base formed of a non-woven cloth or the like has a structure in which fibers are multiply intertwined. A form of breakage of the filter base is a breakage of some fibers caused by a local force applied to the base as a result of repetitive deformation of a fold of the base. In such a folded portion in which breakage easily occurs, the connection between the fibers are reinforced and breakage can be reduced by covering the base surface with a resin or, in particular, by allowing a resin to permeate in the base.

The permeation of a resin is preferably performed by impregnating a base with a resin. This method is preferable in that a base can be strongly reinforced to an inner portion with a resin by relatively simple means. The integration of the base and the resin that forms a reinforcing body improves the strength, or the reduction in breakage effectively improves the lifetime. Various means, such as application of a resin and immersion in a resin, in which the resin is cured after being allowed to permeate in the base, can be employed as means for penetration. A polyurethane is particularly preferably used as the impregnating resin. The simplest impregnation method is a method including applying a resin along a fold, and curing the resin in a state in which the applied resin is allowed to penetrate in the filter base. The resin is preferably allowed to permeate from a base surface onto which the resin is applied to a surface on the opposite side because a high breakage-preventing effect is obtained. The resin is preferably applied with a roller or a brush so that at least end portions of a fold are included. The application is preferably performed so as to cover the entire fold. The term "entire fold" refers to, in a transverse section perpendicular to folds of pleats, a folded portion between two inflection points of the curvature, each of the inflection points being a position at which an original linear portion of the base lead to a bend.

The resin-reinforcing structure may be formed by applying a resin member to a surface of a base. This method is preferable in that the thickness of the resin that covers a surface can be particularly increased to achieve a strong reinforcement. The application may be performed using an adhesive or using adhesiveness of a resin itself. In an embodiment of this structure, when a resin sheet functioning as a reinforcing body is applied by heat fusion bonding, the base may be impregnated with a part of the fusion-bonded resin.

Another embodiment included in the present invention will be described. A pleated filter includes a filter base having folds that repeatedly form mountains and valleys and having a tubular shape whose axial direction is a ridge line direction of the folds, in which the pleated filter includes a reinforcing structure for the mountains which are projecting portions projecting toward the outside of the tubular shape, and the reinforcing structure is a member-reinforcing structure in which reinforcing members provided separately from the filter base are disposed on the back side of the folds in the mountains so as to extend along the folds.

Furthermore, the reinforcing structure in the pleated filter preferably includes both a resin-reinforcing structure including, as a reinforcing body, a resin that covers a surface of the base in the folds or a resin that is allowed to permeate in the base in the folds, and a member-reinforcing structure in which reinforcing members provided separately from the filter base are disposed so as to extend along the folds. Since each of the member-reinforcing structure and the resin-reinforcing structure is effective, reinforcement can be more effectively achieved by providing the two reinforcing structures.

The reinforcing member is a member that can be deformed with a deformation of a fold by, for example, being provided so as to reinforce a fold that forms a mountain and so as to extend along the fold near the recess side of the fold. For example, a rod-like member such as a columnar member or a prism member, or a sheet-like member can be used. In the case of a sheet-like member, the sheet-like member is arranged such that an end face thereof extends along a fold of the filter base (the end face may be constantly in contact with the fold, but need not be necessarily in contact with the fold). It is not preferable for the reinforcing member to reinforce a fold in such a manner that the fold does not deform. The reinforcing member preferably deforms so as to conform to the deformation of the fold. Preferably, the reinforcing member is a member that supports the base to prevent a local deformation, that is, bending, and that functions so as to help restoration from the deformation. A sheet-like member (hereinafter, may be referred to as "reinforcing sheet") is suitable for reinforcing a fold because such a sheet-like member has an anisotropy in which the sheet-like member easily deforms in a direction in which the sheet bends, that is, in a direction perpendicular to a surface of the sheet, but does not deform in a direction of the surface of the sheet.

As each of the reinforcing sheets, a flat-sheet base having a large number of holes penetrating from a front surface to a back surface, that is, a porous sheet material is preferably used. In particular, the use of a mesh-like sheet material is simple and easy. The reinforcing sheet is a member having a strength enough to prevent a bending deformation of the filter. In addition, it is necessary to consider that the reinforcing sheet does not excessively disturb pleats of the filter from expanding by the pressure of untreated water. Furthermore, it is preferable to consider a smooth flow of a filtered liquid and a reduction in the weight of the whole filter.

The material of the reinforcing sheets is not particularly limited as long as the advantages described above are achieved. Typically, the reinforcing sheets are preferably formed of any resin selected from the group consisting of polypropylene, polyethylene (in particular, medium to low-density polyethylene in terms of restoring force), polyamide resins such as nylon, polyester resins such as polyethylene terephthalate, and polyvinyl chloride. In view of, for example, the ease of handling during production, a reduction in the weight, and the cost, a resin member having required strength is preferably used. Polypropylene is particularly preferable from the viewpoint of having an appropriate strength and an appropriate restoring force. Some metallic materials and nonmetallic materials such as glass-ceramics have a performance superior to that of resins in terms of strength. However, in the present embodiment, a restoring force for deformation is also required. Therefore, in the case of a metal, it is preferable to use a spring material or to perform a quenching treatment. However, comprehensively considering a processing for forming a mesh-like structure and corrosiveness for seawater, the resin materials mentioned above are more suitable.

Regarding the dimensions, considering, for example, the application to a ballast water treatment device described below, a size of a hole of about 0.5 to 8 mm (a pitch of 1 to 10 mm in the case of a mesh) is preferably used from the viewpoint of the balance between permeation of the filtered liquid and strength of the sheet. More preferably, the size of a hole is 3 to 5 mm (the pitch is 3 to 5 mm in the case of a mesh). The thickness of the sheet is selected in consideration of the pitch of pleats (spacing between adjacent valleys) and a desired strength. The thickness of the sheet used is preferably 0.3 to 2 mm and more preferably 0.5 to 1.5 mm.

The reinforcing sheets are not limited to sheet materials that are independent from each other. Alternatively, a reinforcing sheet having folds may be provided so as to extend along the inner surface of the tubular shape of the filter base.

Furthermore, the filter base may be subjected to an embossing process. The embossing process is a processing method that is generally used as a process for forming a large number of continuous irregularities on a filter base. The use of a filter base having such a surface suppresses bending of the resulting filter. This structure is preferred in that gaps formed by embossing function as a flow path that does not disturb inflow of untreated water to inner portions of folded pleats and discharge of treated water that has been filtered.

The pleated filter particularly preferably further includes, in addition to the reinforcing structure in the mountains, in folds that form the valleys, a resin-reinforcing structure including, as a reinforcing body, a resin that covers a surface of the base or a resin that is allowed to permeate in the base in the folds. The reason for this is as follows. When a liquid to be filtered flows in a valley, force is applied to the valley in a direction in which the fold opens up. Since a tensile stress is concentrated at the filter base, a failure such as splitting easily occurs. Furthermore, when the liquid to be filtered flows between pleats in mountains and the width of one pleat is thereby increased so as to expand to a width several times the original width, valleys of pleats adjacent to both sides of the expanded pleat are pressed from the original positions toward the left and the right. Consequently, deformation in which ridge lines are sharply bent may also occur in the valleys as in the phenomenon that occurs in mountains.

Still another embodiment of the present invention is a pleated filter cartridge including any one of the pleated filters described above, and fixing members disposed on an upper bottom portion and a lower bottom portion of the pleated filter. In order to use a tubular pleated filter for filtration, it is necessary that an upper bottom portion and a lower bottom portion be sealed so that liquid leakage does not occur between the inside and the outside of the tube. Such a sealing structure may be formed as a part of the filtering device. The sealing structure is preferably constituted, in advance, as a pleated filter cartridge that includes a pleated filter and fixing members integrated with the pleated filter. The handling during production and transportation of the pleated filter cartridge is easy. The pleated filter cartridge is also easily handled during installation in a device.

Reinforcing members whose upper and lower ends are fixed by fixing members are preferably provided on the back side of mountains viewed from the outside of the cylindrical shape of the pleated filter cartridge. A member-reinforcing structure in which an upper end and a lower end of each of the reinforcing members are fixed by fixing members is effective as means for reducing a failure of a fold in a mountain. A typical example of the reinforcing members are reinforcing sheets formed of a resin. The reinforcing members are not limited thereto. The reinforcing members may be replaced with other members or other reinforcing means. Alternatively, other reinforcing means may be used in combination. The resin-reinforcing structure described above is preferably used in combination as the other means for reinforcing mountains. It is expected that a synergistic reinforcing effect is obtained. The upper and lower ends of the reinforcing members are preferably fixed by the fixing members alone. That is, preferably, no other members that connect reinforcing members adjacent to each other are provided. Reinforcing members that are adjacent to each other can freely move and deform except for the upper and lower ends thereof. Accordingly, the reinforcing members easily conform to the deformation of pleats to increase the reinforcing effect.

The present invention discloses a ballast water treatment device in which the pleated filter or the pleated filter cartridge is used for filtration. Specifically, the ballast water treatment device includes the above-described tubular pleated filter that is used for filtration, a top surface of a cylinder and a bottom surface of the cylinder of the pleated filter each being sealed in a watertight manner, the pleated filter being rotatably held about a cylindrical axis; an untreated-water nozzle that ejects untreated water toward an outer circumferential surface of the pleated filter; a case that includes an outer tubular portion provided so as to surround the pleated filter and including a nozzle opening of the untreated-water nozzle therein; a filtered-water flow path that leads filtered water having passed through the pleated filter from the inside of the cylinder of the pleated filter to the outside of the case; and a discharge flow path that discharges discharge water that is not filtered by the pleated filter to the outside of the case.

In the device having the above structure, untreated water is ejected from the nozzle opening outside the cylinder of the cylindrical pleated filter toward an outer surface of the pleated filter, and thus the pressure of the untreated water concentrates at a part of pleats. Consequently, the pressure is applied in directions in which the pleats open up, and a failure of the filter is more likely to occur in each of a valley and a mountain. In view of this, by employing the reinforcing structure described above, it is possible to expect advantages such as the suppression of the occurrence of filtration defects, a long-term operation of the device due to extension of the lifetime of the pleated filter, and a reduction in the operation cost.

In this case, the top and the bottom of the pleated filter may be fixed and sealed with lid members. The pleated filter may be used in the form of a pleated filter cartridge in which the pleated filter and fixing members are integrated with each other. The fixing members may also function as lids.

A method in which the pleated filter or the pleated filter cartridge is used for filtration may be a method for treating ballast water, the method including installing the ballast water treatment device in a hull; using, as untreated water, seawater taken from the outside of the hull; further applying a sterilization treatment to filtered water treated by the ballast water treatment device; and subsequently storing the resulting water in the hull as ballast water.

By using the device or using the method, a failure of a filter is reduced as compared with existing techniques, and the filter can be stably used for a long period of time without causing filtration defects. Consequently, the labor cost of maintenance and the cost of materials to be exchanged can be reduced, and the production of ballast water can be further facilitated.

### [Details of embodiments of present invention]

Structures of a pleated filter, a pleated filter cartridge, and a ballast water treatment device according to the present invention will now be described with reference to the drawings. The scope of the present invention is not limited to these embodiments but is defined by the claims described below. It is intended that the scope of the present invention includes equivalents of the claims and all modifications within the scope of the claims.

### (Structure of pleated filter)

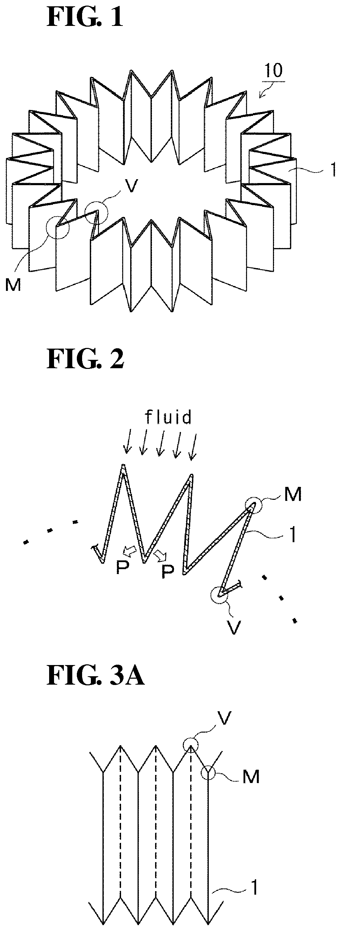

Figure 1 is a perspective schematic view illustrating a typical structure of a pleated filter according to an embodiment of the present invention. A pleated filter 10 is obtained by forming a pleated shape by folding a planar strip-like base 1 along parallel folds so as to have alternating mountains and valleys and further connecting to have a cylindrical shape. A cylindrical pleated filter will be described below as a typical example of a pleated filter that is particularly effective. However, reinforcing structures disclosed herein can be applied not only to tubular pleated filters but also to flat-plate filters in view of the effect of preventing breakage.

A description will be made under the assumption that, in Fig. 1, a liquid to be filtered is supplied from the outside of the cylinder of the cylindrical pleated filter 10, and a liquid filtered by the base 1 of the filter is discharged from the inside of the cylinder. Even in the case where the filter has a flat-plate shape or the like, the description below may be read in accordance with a direction of a flow of the liquid to be filtered (direction in which pressure is applied) depending on the use form of filtration. A folded portion projecting toward the side to which the pressure of the liquid to be filtered is applied is defined as a mountain. In Fig. 1, a portion M which is a folded portion projecting toward the outside of the tubular shape is a mountain, and a portion V which is a folded portion projecting toward the inside of the tubular shape is a valley.

A porous resin sheet is used as the base of the filter. Examples of the base that can be used include porous structures such as a stretched porous body, a porous body by phase separation, and a non-woven cloth that are formed of a material such as polyester, nylon, polyethylene, polypropylene, polyurethane, polytetrafluoroethylene (PTFE), or polyvinylidene fluoride (PVdF). For the purpose of performing a treatment at a high flow rate, a non-woven cloth formed of a polyester such as polyethylene terephthalate is particularly suitably used.

In Fig. 1, a reinforcing structure for preventing breakage may be provided in valleys or mountains which are folded portions, or each of valleys and mountains. The valleys and the mountains will be described. Figure 2 is a partially enlarged view of a transverse section of the pleated filter in Fig. 1, the transverse section being perpendicular to a direction of a cylindrical axis of the pleated filter. Reference character V indicates a valley, and reference character M indicates a mountain. Force applied to the filter base 1 will be described with reference to Fig. 2. In Fig. 2, the arrows arranged in parallel show a state in which a fluid to be filtered is supplied from the M side. Pressure P is applied to the filter base 1 in a direction in which pleats open up. Furthermore, the pressure P applied is changed by variations in the flow rate and the pressure of the untreated liquid, and vibrations and repetitive bending act on the filter base 1. In the pleated filter that receives the pressure of a liquid to be filtered, the pressure P is applied to a valley in a direction in which the folded portion opens up, and a tensile stress is concentrated at the base 1 in the valley. When the pressure varies, bending is repeatedly applied to the folded portion. Accordingly, it is believed that, in particular, a hole is easily formed in a valley due to splitting of the base along the ridge line of the folded portion. Therefore, in a valley, it is preferable to take measures for preventing breakage so that a folded portion is unlikely to split.

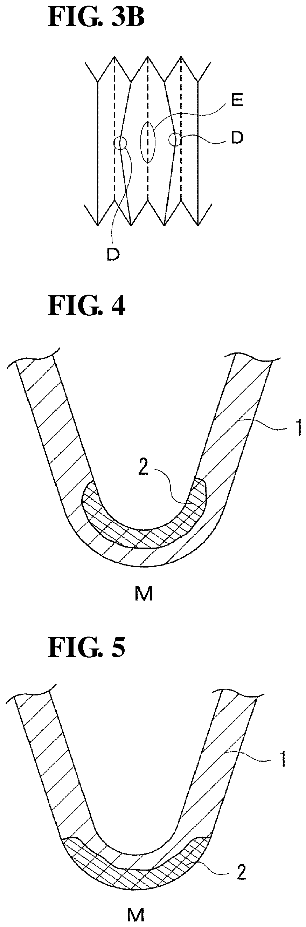

Figures 3A and 3B are each a view illustrating a part of the pleated filter in Fig. 1, viewed from a side face of the cylinder. An example of a failure generated in a pleated filter due to the pressure P described above will be described with reference to Figs. 3A and 3B. Figure 3A schematically illustrates a state before bending occurs. Figure 3B schematically illustrates a state when bending, which may cause a failure, occurs. Reference character M indicates a mountain, and reference character V indicates a valley. Upper and lower ends of the filter are fixed in order to fix the shape and to achieve sealing (fixing members are not illustrated in the figures). Accordingly, when the pressure P is repeatedly applied in the direction in which a folded portion in a mountain opens up as illustrated in Fig. 2, portions D near the center of the filter may be bent in the directions illustrated in Fig. 3B. When this bending occurs repeatedly, breakage such as cracking or tearing is generated in the portions D of the filter base 1, and the filtration function may be impaired. In particular, when the liquid to be filtered is a liquid such as water, the filter receives a higher pressure than that in the case of a gas such as air, and thus the filter is easily broken in the folded portions. Therefore, in a mountain, it is preferable to take measures for preventing breakage so that a ridge line of a folded portion is unlikely to bend.

Furthermore, in the state illustrated in Fig. 3B, the distance between the portion D and the portion D may expand to a length several times or more the original width, so that even inner portions of the pleats may be expanded. Pleats disposed on the left side and the right side of the expanded pleats (in the figure, disposed in the valleys located outside the expanded portions D) are pressed toward the left side and the right side. Consequently, bends similar to the portions D in Fig. 3B may also be generated in the valleys. Thus, a failure caused by a mechanism different from the known failure of a portion E in the figure, the known failure being caused by opening and closing of a folded portion, is also observed in a valley. Accordingly, also in a valley, it is preferable to take measures for preventing breakage so that a ridge line of a folded portion is unlikely to bend, and breakage due to a bend is unlikely to occur.

### (Resin-reinforcing structure)

In an embodiment of a breakage-preventing structure of a folded portion of a filter base which is a porous resin sheet, a potion near the folded portion may be reinforced with a resin. Examples of means for applying, as a reinforcing structure, a resin to a filter base include application of a resin to a base surface, impregnation of a base surface with a resin, and application of a resin sheet. Any other method may be used as long as the method is means for integrating a resin with a base surface or means for impregnating a base with a resin. The simplest method is a method including applying a resin along a ridge line of a folded base. The application can be performed with known means such as a brush, a roller, or a spray. After the resin is applied to the base surface, the resin is cured. The filter base is preferably impregnated with a resin because the base can be reinforced more strongly. Also in the case where a resin is applied onto a base surface, curing is preferably performed in a state in which the base is impregnated with at least a part of the resin, and the resin is more preferably allowed to permeate on the back surface side of the application and cured.

Figures 4 to 6 are each an enlarged schematic view of a folded portion of a pleated filter, the view illustrating a resin-reinforcing structure. A description will be made under the assumption that the folded portion is a mountain M. However, the resin-reinforcing structure can be similarly applied to a valley V. Figure 4 illustrates a state in which, in a mountain M, an inner surface (concave side) of a fold of a filter base 1 is impregnated with a resin 2 for reinforcement. The filter base 1 is formed of a porous resin. The resin 2 is adhered to a base surface in pores of the porous resin constituting the filter base 1. The pores may be filled by impregnation, and the resulting impregnated portion may become nonporous.

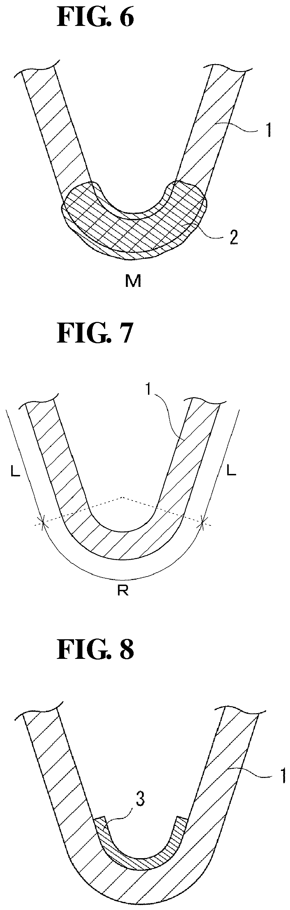

Figures 5 and 6 illustrate other embodiments of impregnation. In Fig. 5, an outer surface of a filter base 1 in a folded portion is impregnated with a resin 2. In Fig. 6, a resin 2 is allowed to penetrate through both surfaces of a base 1. Figure 6 illustrate a state in which the impregnating resin 2 having a certain thickness is adhered so as to further cover the surfaces of the base 1. In this manner, the reinforcing structure is not limited to the structure in which the inside of the base 1 is impregnated with the resin 2, and adhesion of a resin on a surface of the base 1 is also effective. The most preferable embodiment is one in which the resin is allowed to permeate wholly from one surface to the other surface of the base.

A region to which a resin-reinforcing structure is applied will be described with reference to Fig. 7. Figure 7 is an enlarged schematic view of a folded portion of a pleated filter. In a macroscopic view, the fold forms an acute corner. However, in an enlarged view, the fold forms a bend having a certain curvature. The region of the target for reinforcement of a fold in a mountain or a valley is a region in which at least a bend serving as a fold is added to a filter base. In a sectional view, the base has a shape in which a portion L, which is a linear portion corresponding to a flat plate, leads to a portion R, which is a curved portion of a folded portion, and further leads to a portion L, which is a linear portion. The portion R, which is a curved portion corresponding to the folded portion is the region to which a reinforcing structure is applied.

In the transverse section of a fold, preferably, the resin-reinforcing structure is provided over the entire portion R, and ends (boundaries) of a resin-reinforced portion are located in the portions L, which are the linear portions of the base. Stress tends to be concentrated at a boundary between the reinforced portion and a non-reinforced portion. Accordingly, such a boundary is preferably located in a linear portion, which is unlikely to deform, because breakage does not easily occur.

The resin-reinforcing structure is provided at least in a central portion in a longitudinal direction of a folded portion (a direction in which the ridge line extends). The term "central portion" refers to a portion near the center of a length of a pleat in the vertical direction when the upper and lower ends of the pleat are fixed, and preferably a portion having a length of at least 1/4 of the length of the folded portion. The folded portion is preferably reinforced over its entirety in the longitudinal direction thereof. This is because a boundary between a reinforced portion and a non-reinforced portion has a discontinuous hardness, and thus stress tends to become concentrated at the boundary, which may easily cause breakage during long-term use.

Examples of the impregnating resin that can be used include thermosetting resins such as silicones, epoxy resins, and polyurethanes; thermoplastic resins such as polyvinyl chloride (PVC), polyesters, nylons, polyethylene, polypropylene, ETFE, and PVdF; solutions prepared by diluting PVdF or a silicone with a solvent; and elastomers containing another synthetic rubber or natural rubber. Resins that easily permeate into the material of the filter are desirable. In particular, when pleats are formed and subsequently reinforced by application, polyvinyl chloride and polyurethanes are preferable, and polyurethanes are particularly preferably used because, for example, the application is easily performed.

During impregnation, the impregnating resin needs to have a fluidity for entering a porous body. On the other hand, after impregnation, it is necessary that the resin be integrated with a filter so as not to be easily separated from the filter. In the case of a thermosetting resin, the resin can be cured by heating after impregnation. In the case of a two-component curable resin, immediately after mixing, a filter is impregnated with the mixed resin, and the mixed resin can then be cured. In the case of a resin that is diluted with a solvent to decrease the viscosity, after impregnation, curing is preferably performed after a while in order to give the solvent time to dry.

Still more preferably, the impregnating resin is a resin having a low hardness. The impregnating resin is cured in a state in which the resin is allowed to permeate so as to fill an inner part of a porous body or gaps between fibers of the filter base. In the case of a soft resin, with a deformation of a filter base, the resin can also be flexibly deformed with a certain degree of elasticity, and thus breakage of the base can be suppressed. In particular, when the filter base is formed of fibers such as a non-woven cloth, the impregnating resin covers the fibers and binds the fibers to each other to reduce the movement of the fibers. Consequently, it is believed that breakage of the fibers due to repetitive deformation can be prevented. The hardness of the resin is preferably, in terms of durometer hardness, a Shore hardness of 20A to 60A (in accordance with rubber-elastomer (JIS K6253), standard measurement time: 3 seconds for vulcanized rubber, and 15 seconds for elastomer) or a Shore hardness of 5D to 30D (plastic (JIS K7215), a maximum value of an indicator is read within one second). The resin is required to have characteristics that the resin does not excessively hinder deformation of the shape of the filter (expansion of pleats) and reduces a failure of the filter base. If the hardness is less than 20A (or 5D), the strength of the resin is insufficient, and the resin may be broken with the deformation of the filter. Therefore, for example, unraveling of fibers of a non-woven cloth cannot be prevented. If the hardness exceeds 60A (or 30D), flexible deformability becomes poor, which is not preferable from the viewpoint of excessively hindering deformation of the pleated filter.

In particular, soft polyurethanes are preferably used from a comprehensive viewpoint of, for example, the adhesive strength with a non-woven cloth, the ease of application, the effect of suppressing breakage, and the cost. Regarding knowledge of the difference between a soft polyurethane and a hard polyurethane, for example, a soft polyurethane including two components of SA-7073A and SA-7502B manufactured by Sanyu Rec Co., Ltd. is soft and has a good breakage-preventing effect compared with a hard polyurethane including two components of SA-7073A and SA-7068B manufactured by Sanyu Rec Co., Ltd.

Figure 8 illustrates still another example of a resin-reinforcing structure, in which a resin sheet 3 is attached to a surface of a base 1. With the above means that does not include impregnation, the reinforcement can also be achieved by receiving the pressure of a liquid to be filtered, and by bonding the resin sheet to the base 1 to share the force received by the base 1. A structure in which a resin sheet is attached on the projecting surface side of the base 1 or a structure in which a resin sheet is attached to two surfaces of the base 1 also achieve the same effect, although the structures are not illustrated in the figure.

### (Method for producing resin-reinforcing structure)

As a method for producing a resin-reinforcing structure other than application of a resin, a method using a resin sheet will be described. A resin to be attached to or to be allowed to permeate in a filter base is prepared in the form of a sheet. The size of the sheet is determined in accordance the size of a portion to be reinforced with a resin. First, the sheet-like resin is placed on one surface of the filter base. The resin is a thermoplastic resin having a melting point lower than that of the filter base. For example, as a porous resin sheet, a polyester non-woven cloth containing, as a main component, polyethylene terephthalate having a melting point of about 260°C can be suitably used. As an impregnating thermoplastic resin, polymethylpentene, 66-nylon, or polycarbonate having a melting point of about 230°C, polyethylene that usually has a melting point of about 120°C, or polypropylene that usually has a melting point of about 160°C can be suitably used. A part or the whole of the resin sheet is melted by heating the resin sheet and the filter base with a heating-pressurizing device such as a heat sealer. In this step, an inner part of a porous body constituting the filter base is impregnated with a part or the whole of the resin. The filter base is bent after the heating or in parallel with the heating. In this bending, by bending the filter base while bringing a metal jig with a desired radius into contact with the filter base, the curvature of folded portions can be made uniform.

The method described above is a method for producing a pleated filter, the method including periodically bending a planar base to form mountains and valleys continuously and repeatedly. The method for producing a pleated filter includes a step of placing a resin sheet on at least one surface of a base that forms the folded portion, an impregnation step of impregnating the base with at least a part of the resin sheet by heating the resin sheet and a part of the base, the part having the resin sheet thereon, and a cooling step of performing cooling and fixing in a state in which the folded portion is bent.

The description has been made of a case where a base is impregnated with a resin for reinforcement. Alternatively, a resin-reinforcing structure other than a structure obtained by impregnation can be formed by a method including bonding a resin sheet with an adhesive or a method including bonding a resin sheet by heat fusion bonding. Even in the case of impregnation, a predetermined portion of a base may be impregnated with a resin by another method without using a resin sheet, and the portion may then be bent. Alternatively, a method may also be used in which a base is bent and then impregnated with a resin. Furthermore, the use of the jig for determining the curvature is not essential in bending, and the base may be bent by an ordinary folding operation. Even when a filter base is folded without using a particular jig, the folds are bent in a curved manner with a certain radius or more in accordance with the material and the thickness of the filter base. The method for applying a resin may be a known application method. Examples of the application includes not only application with a roller and application with a brush or a writing brush but also a method including pouring a resin directly onto a surface of a base.

### (Member-reinforcing structure)

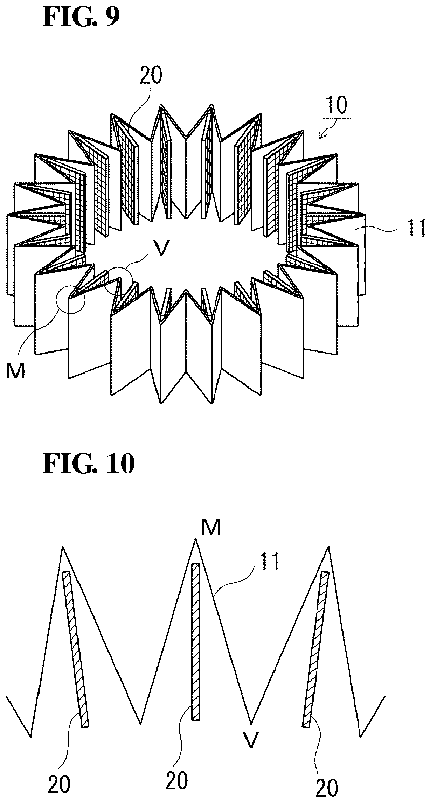

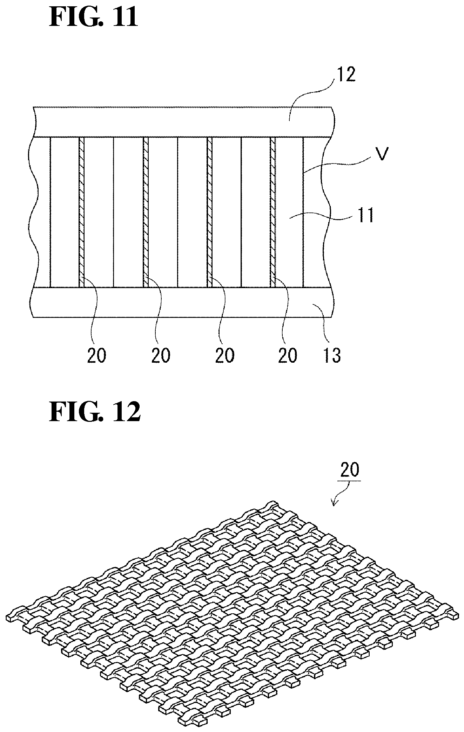

Embodiments of a member-reinforcing structure in which reinforcing members provided separately from a filter base are disposed along folds will be described with reference to the drawings. Figure 9 is a perspective schematic view illustrating the structure of a pleated filter 10, which is a typical example of the member-reinforcing structure. Reinforcing sheets 20 that are independent from each other are provided in recesses on the inside of a tubular shape, the recesses being disposed on the back side of mountains M, so as to extend along folds in the mountains. Figure 10 is a schematic enlarged view that illustrates a part of Fig. 9 so that this state is easily understood. The phrase "having a reinforcing member near the recess side of a fold" means that a reinforcing sheet 20 is provided in a recess viewed from the valley side, the recess being disposed on the back side of a mountain, that is, provided on the recess side between a valley V and an adjacent valley V in the figure. As illustrated in Fig. 10, a plate-like reinforcing sheet 20 is preferably disposed at a position near the center of adjacent valleys V toward the back side of a mountain M. Figure 11 is a schematic side view of a part of Fig. 10, viewed from the inner side of the cylinder, and is a view illustrating a fixing state of the shape. Reinforcing sheets 20 are fixed together with a filter base 11 by a fixing member 12 provided on an upper portion of the cylinder and a fixing member 13 provided on a lower portion of the cylinder. The fixing members are disc-shaped or ring-shaped members which are arranged on and under the cylinder and, while fixing the shape of the arrangement of the filter base 11 and the reinforcing sheets 20, which maintain watertightness of the fixed portions. An example of a method for fixing the upper end and the lower end of the filter base 11 and the reinforcing sheets 20 is a method of fixing with a resin functioning as an adhesive.

In this structure, when force is applied to folds of the filter base 11 in a direction in which the folds bend, the reinforcing sheets 20 support the filter base 11 so that the folds are unlikely to bend. The reinforcing sheets 20 are members having a strength enough to prevent deformation by bending. Furthermore, preferably, the reinforcing sheets 20 do not excessively hinder the expansion of corresponding pleats due to the pressure of a liquid to be filtered. Specifically, while the reinforcing sheets 20 prevent the filter base from bending as illustrated in the portions D in Fig. 3B, the reinforcing sheets 20 are preferably bent into gentle curves. The reinforcing sheets 20 preferably have a restoring force for returning to the original shape when released from the pressure.

Figure 12 illustrates a mesh-like reinforcing sheet 20 which is a typical example of a member used as a reinforcing sheet. Figure 12 illustrates an example of a mesh sheet formed of a resin. The use of such a mesh sheet having irregularities thereon can prevent close contact between the reinforcing sheet and the filter base and provides an effect of preventing a flow of a filtered liquid from being disturbed. Examples of a porous sheet material that can be used further include a punched material obtained by forming a large number of holes in a sheet material, and a sheet material having continuous pores with a three-dimensional mesh-like structure.

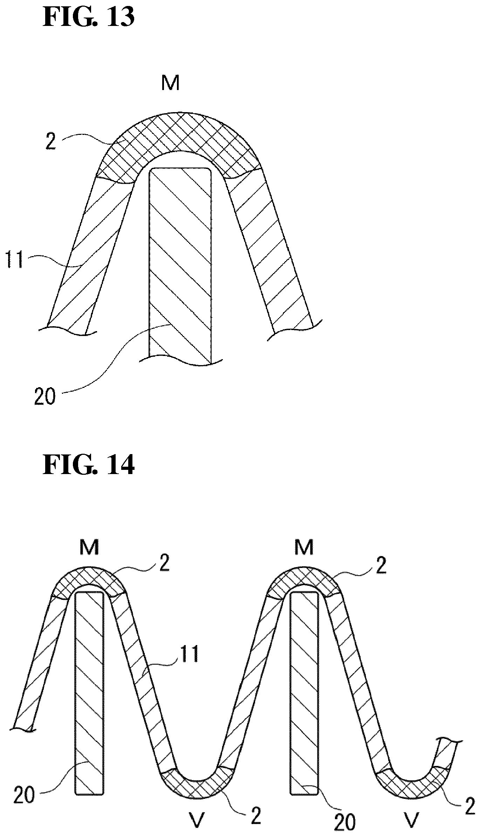

Figure 13 illustrates, as an example of a combination of reinforcing structures, a structure in which a resin-reinforcing structure is provided in a fold in a mountain M, and a reinforcing sheet serving as a reinforcing member is provided on the back side of the mountain. A reinforcing sheet 20 is provided so as to extend along a portion impregnated with a resin 2. For the sake of easy understanding, in the figure, the reinforcing sheet 20 is not in contact with a filter base 11. However, in the actual structure, a part or the whole of the reinforcing sheet 20 may be in contact with the filter base 11. By providing the two reinforcing structures in combination in this manner, the functions of the two reinforcing structures are complementarily achieved, and the breakage-preventing effect can be further enhanced.

Figure 14 is a sectional schematic view illustrating, as another example of a combination of reinforcing structures, a structure in which a resin-reinforcing structure is provided in each of folds in mountains M, a reinforcing sheet serving as a reinforcing member is provided on the back side of each of the mountains, and a resin-reinforcing structure is further provided in each of folds in valleys V. Figure 14 illustrates only a part of a section of pleats that continue so as to have a tubular shape. This structure is the same as the structure illustrated in Fig. 13 except that resin-reinforcing structures are provided in the valleys V. By combining the reinforcing structures in this manner, the functions of the two reinforcing structures are complementarily achieved, the breakage-preventing effect can be further enhanced, and it is possible to obtain a breakage-preventing effect in both the mountains M and the valleys V.

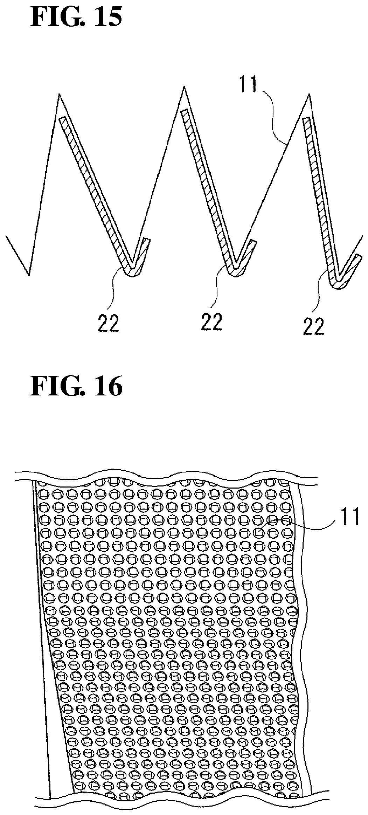

Figure 15 illustrates a still another embodiment. Figure 15 illustrates reinforcing sheets 22 provided so as to extend along one surface of the inner surface on the valley side. In this manner, the reinforcing sheets are not limited to those arranged on the centers of valleys and those that are uniformly arranged so as to extend along a filter surface on the valley side. By providing the reinforcing sheets so as to cover valleys of the filter base 11 as illustrated in Fig. 15, the effect of reinforcing the valleys can also be obtained.

In the structure in which reinforcing sheets are arranged so as to extend along a filter base, preferably, the filter base is further subjected to an embossing process. Figure 16 is a view illustrating an example of a filter base 11 subjected to an embossing process. A large number of circular recesses and projections are repeatedly and continuously formed on the filter base 11. The shape of the embossing is not limited as long as recesses, projections, or recesses and projections are continuously formed. The embossing suppresses close contact between a surface of a filter and an adjacent surface of the filter or a surface of a reinforcing sheet. Since a suitable gap is reliably formed on a filter surface, the filter prevents a flow of a filtered liquid from being disturbed.

### (Pleated filter cartridge)

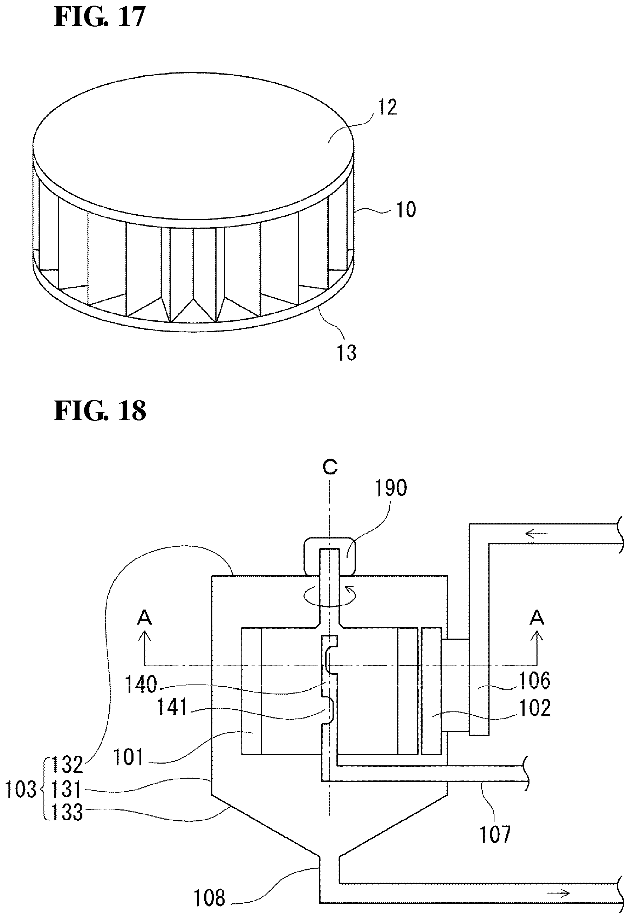

Figure 17 is a perspective schematic view illustrating a typical example of the structure of a pleated filter cartridge. A fixing member 12 is provided on an upper bottom of a cylinder of a pleated filter 10, and a fixing member 13 is provided on a lower bottom of the cylinder. In order to use a tubular pleated filter for filtration, it is necessary that the upper bottom portion and the lower bottom portion be sealed so that liquid leakage does not occur between the inside and the outside of the tube. For this purpose, the pleated filter 10 and each of the fixing member 12 and the fixing member 13 are sealed with an adhesive therebetween. The simplest method is a method including applying an adhesive onto a flat-plate surface of a plate-like fixing member, and curing the adhesive in a state in which an end face of a filter base of a pleated filter is pressed onto the flat surface of the fixing member, the flat surface having the adhesive thereon. The production method is not limited, and other methods may be employed. For example, a groove along an end face of a filter base may be formed on a fixing member. Alternatively, a groove to be filled with an adhesive may be formed on a fixing member. Alternatively, a method may be employed in which an adhesive is applied on the filter base side, and the filter base is combined with a fixing member. The adhesive is not particularly limited, and may be selected from adhesives with which a filter base and fixing members to be used are bonded to each other and can withstand a filtration operation. Figure 17 illustrates disc-shaped fixing members. Alternatively, the fixing members may have other structures. For example, ring-shaped fixing members may be used.

When a pleated filter includes a member-reinforcing structure, reinforcing members used in the reinforcing structure are fixed to the fixing members. The reinforcing members are preferably fixed using an adhesive as in the fixation of the pleated filter. When a filter base and reinforcing members can be bonded and fixed at the same time using the same adhesive, an assembling step can be simplified.

### (Filtering device)

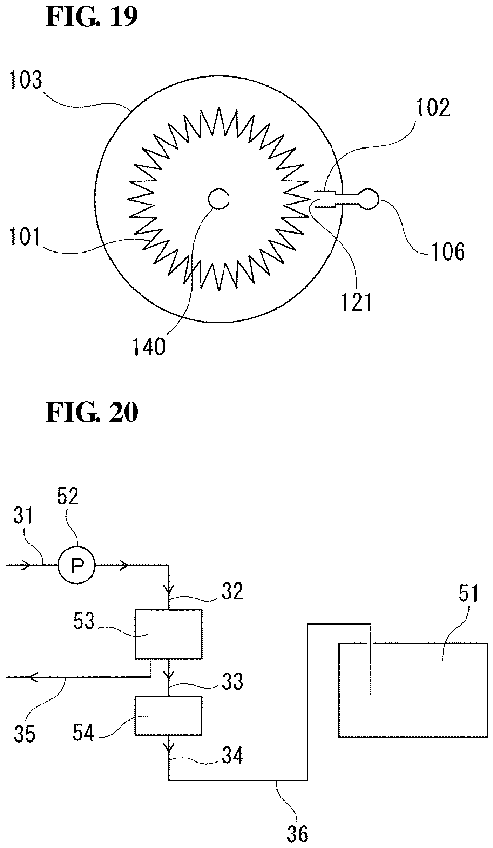

As a preferred application example of a filtering device using the pleated filter described above, a structure of a ballast water treatment device will be described with reference to drawings. Figures 18 and 19 are views illustrating an example of a device for treating ballast water for ships, according to an embodiment of the present invention. Figure 18 is a schematic view illustrating the structure of a vertical section including an axis line. Figure 19 is a schematic view illustrating the structure of a horizontal A-A section in Fig. 18. A cylindrical pleated filter (or a pleated filter cartridge including fixing members) 101 is disposed about an axis line, which is the center of rotation, and is mounted to be rotatable about a central pipe 140 arranged in the center (the pipe does not rotate). Upper and lower surfaces of the pleated filter 101 are sealed in a watertight manner. The rotatable attachment structure also needs to have a watertight structure. However, the attachment structure is not particularly limited, and a known structure may be used. A case 103 is provided so as to cover the whole filter. The case 103 includes an outer tubular portion 131, a lid portion 132, and a bottom portion 133. A discharge flow path 108 is provided on the bottom portion 133. An untreated-water flow path 106 and an untreated-water nozzle 102 are provided in order to introduce seawater as untreated water into the case 103. The untreated-water nozzle 102 is provided to extend from the untreated-water flow path 106 so as to have a nozzle opening 121 thereof in the outer tubular portion 131 of the case 103, and is configured so that untreated water flows toward an outer circumferential surface of the pleated filter 101. A motor 190 is provided on the central axis of the pleated filter 101 for the purpose of the rotation of the pleated filter. The motor 190 is driven by an electric power supplied from a driving control unit (not illustrated).

In this embodiment, the untreated water ejected from the untreated-water nozzle 102 is applied to the outer circumferential surface of pleats of the pleated filter 101, and an effect of cleaning the pleated filter 101 is obtained by the pressure of the untreated water. The untreated water that is not filtered and suspended substances settled in the case are sequentially discharged from the discharge flow path 108 on the bottom portion 133 of the case. This point that filtration is performed while continuously and constantly discharging suspended substances and residual untreated water in this manner is also a feature of this device. This feature is advantageous for reliably achieving a large amount of treatment of 50 to 100 ton/hour and, in a larger system, 4,000 ton/hour, which are required for ballast water. In such a large-sized filtering device that treats a large amount of water, the size of the pleated filter is large, and thus it is particularly important to prevent the breakage of the pleated filter. Although valves and other components are not illustrated in the discharge flow path 108 in the figure, devices necessary for maintenance and flow rate control may be provided. The filtered water filtered by the pleated filter 101 is guided to a filtered water flow path 107 through a water intake hole 141 provided in the central pipe 140 in the inside of the filter, and is discharged to the outside of the case 103.

An example of a device that performs a treatment at a rate of 100 ton/hour includes a pleated filter having an outer diameter of 700 mm, a length in the axial direction of 320 mm, a height as an effective area of 200 mm, a pleats depth of 70 mm, and a number of pleats of 420. Another example of a device that performs a treatment at a rate of 250 ton/hour includes a pleated filter having an outer diameter of 810 mm, a length in the axial direction of 399 mm, a height as an effective area of 377 mm, a pleats depth of 70 mm, and a number of pleats of 517. The nozzle opening 121 of the untreated-water nozzle 102 preferably has a rectangular opening. A large amount of water is ejected from the untreated-water nozzle onto the pleated filter surface, thereby applying a force in a direction in which mountains of the pleated filter are pushed and become separated. The mountains become separated, and a liquid flows in and out from gaps between pleats. Consequently, a flow is generated on a surface of the filter base, and an effect of cleaning the filter is obtained. When the mountains are separated in this manner and folds in the mountains are bent, breakage of the folds easily occurs. The concentration of the stress at a valley also easily forms a hole such as splitting in the fold of the valley. By using the pleated filter whose folds are reinforced as described above, such a breakage can be effectively reduced, and the device can be stably operated for a long period of time. In particular, in order to prevent mountains from bending, the member-reinforcing structure with a reinforcing sheet is effective. By combining the member-reinforcing structure with the resin-reinforcing structure, a stronger breakage-preventing structure can be obtained. Each of the valleys also preferably includes the resin-reinforcing structure. In order to suppress breakage and to effectively obtain a cleaning effect, the hardness of the resin is preferably a Shore hardness of 20A to 60A or 5D to 30D. When the filter base is formed of a non-woven cloth, a polyurethane resin is particularly preferably used.

Figure 20 is a block diagram that schematically illustrates the overall structure of a system for treating ballast water for ships, in which the ballast water treatment device described above is used as a filtering device. In Fig. 20, untreated water, which is seawater taken from the ocean, is fed through a pipe 31 with a pump 52 and is supplied to a filtering device 53, which is filtering means, through a pipe 32. Filtered water filtered in the filtering device 53 passes through a pipe 33 and is fed to sterilization means 54 (which is not essential) such as an ultraviolet irradiation device, an electrolytic device, or a chemical treatment device. Discharge water that has not been filtered in the filtering device 53 is led to the outside of the device through a pipe 35. The seawater that has been subjected to a sterilization treatment is fed to a tank 51 through pipes 34 and 36. In this example, the ballast water treatment device using the pleated filter described above is used as the filtering device 53.

### (EXPERIMENTAL EXAMPLE 1)

In order to confirm the effect obtained by a resin-reinforcing structure, impregnation with a resin and the comparison of strength of portions subjected to bending were performed. Materials used are as follows.
Porous filter: Polyethylene terephthalate non-woven cloth (trade name: AXTAR^{™} G2260-1S BK0, manufactured by Toray Industries, Inc.)
Impregnating resin: Polypropylene non-woven cloth (trade name: STRATECH RW2100, manufactured by Idemitsu Unitech Co., Ltd.)
Heat sealer: Desktop sealer NL-301J, manufactured by ISHIZAKI ELECTRIC MFG. CO., LTD.

An impregnating resin was placed on a folded portion of a porous filter serving as a base, and heat-sealed while a seal timer of a heat sealer was set to 4 (heating time: about one second). Cooling was performed in a state in which the impregnating resin was completely heat-melted and the porous filter was impregnated with the resin. Immediately after heating was further performed under the same heating conditions, a stainless rod having a diameter of 3 mm was inserted in the folded portion, and the folded portion was bent along the shape of the stainless rod. The resulting porous filter having a fold with a curvature radius of 1.5 mm was used as a filter of Example. The same type of porous filter was bent at an angle of 180 degrees without further treatment. The resulting porous filter was used as a filter of Comparative Example.

The folded portion of each of the porous filters was opened up, and the porous filter was punched into a dumbbell shape such that the folded portion was located at a position near the center of the dumbbell and in a direction perpendicular to a tensile direction. In addition, a filter base having no folded portion was punched so as to have the same shape. Thus, a sample for comparison was prepared. The breaking strength was measured using these dumbbells as samples at a chuck distance of 3 cm and a tensile speed of 100 mm/min. According to the results, in Comparative Example, all the samples were broken in the folded portions, and the breaking strength was 33 MPa. The measurement results of the base having no folded portion was 40 MPa. These results suggest that the strength was decreased by bending. In contrast, in Example, breaking did not occur in the folded portions impregnated with the resin, and all the samples were broken in other flat portions. The breaking strength thereof was 41 MPa. Specifically, it was confirmed that the folded portions had a strength higher than 41 MPa.

### (EXPERIMENTAL EXAMPLE 2)

An experiment for confirming a breakage-preventing effect obtained by applying a polyurethane resin was conducted. A filter base was folded at an angle of 180 degrees, and a polyurethane resin was applied onto a mountain of the filter base with a roller. The resulting filter base was used as a sample of Example. The applied resin impregnated to the back side of the base and cured. A filter base which was similarly folded but to which no resin was applied was prepared as a sample of Comparative Example. The filter and the resin used are as follows. Note that the manufacturers, the model names, and the like are not limited thereto. The same types of alternative products may be used within a range where the advantages of the present embodiment are achieved.
Porous filter: Polyethylene terephthalate non-woven cloth (trade name: AXTAR^{™} G2260-1S BK0, manufactured by Toray Industries, Inc.)
Applied impregnating resin: Soft polyurethane resin (trade name: A main agent SA-7073A and a hardening agent SA-7502B manufactured by Sanyu Rec Co., Ltd. were mixed at a ratio of 23:100.)

The breaking strength was measured by the same method as that used in Experimental Example 1. Regarding the impregnation of the resin, no significant difference in strength was observed between Example and Comparative Example. Next, the fold was bent (opened up and closed) 50,000 times, and the breaking strength was then measured by the same procedure. The rate of decrease in strength between the sample that was not subjected to bending and the sample after bending was compared. In Example, in which the porous filter was impregnated with the polyurethane resin, the strength was decreased by about 10% due to bending. On the other hand, in Comparative Example, in which the porous filter was not impregnated with the resin, the strength was decreased by about 40%. According to the observation of the samples, in the sample impregnated with the resin, the sample was impregnated with the resin so as to connect fibers of the base to one another. Accordingly, it was confirmed that unraveling and breakage of the fibers could be prevented.

### (EXPERIMENTAL EXAMPLE 3)

In order to confirm the effect obtained by applying a resin, the effectiveness of a breakage-preventing structure was examined using a ballast water treatment device including cylindrical pleated filters. A resin-reinforcing structure obtained by applying a resin onto all mountains of a pleated filter was used as the breakage-preventing structure. The filter base and the resin used were the same as those in Experimental Example 2. The application was performed only on the mountains with a roller. For comparison, a pleated filter onto which no resin was applied was used. In addition, the effect was also confirmed in the sample which was used in Experimental Example 1 and in which mountains and valleys were impregnated with polypropylene.

The ballast water treatment device used has the structure illustrated in Figs. 18 and 19. Regarding pleated filters, a single pleated filter was used in the form of a filter cartridge, and three filter cartridges were connected to one another so as to be stacked in an axial direction. A bottom portion of the lowest stage and a lid portion of the highest stage are sealed with flat plate-shaped fixing members. Portions located between the cartridges are fixed with ring-shaped fixing members. The inner parts of the cylinders of the three-stage pleated filters communicate with each other to form a space. This structure can provide a three-fold effective area. The single pleated filter has an outer diameter of 700 mm, a length in the axial direction of 320 mm, a height as an effective area of 280 mm, a pleats depth of 70 mm, and a number of pleats of 420. The nozzle opening is a rectangular opening having a long side in a direction of the length of the pleats and a short side in a direction of the spacing between the pleats. Standard seawater (salt concentration: 2% to 4%, turbidity: 1 to 1,000 NTU (nephelometric turbidity units)) taken in Imari city in Saga prefecture was used as seawater which was untreated water.

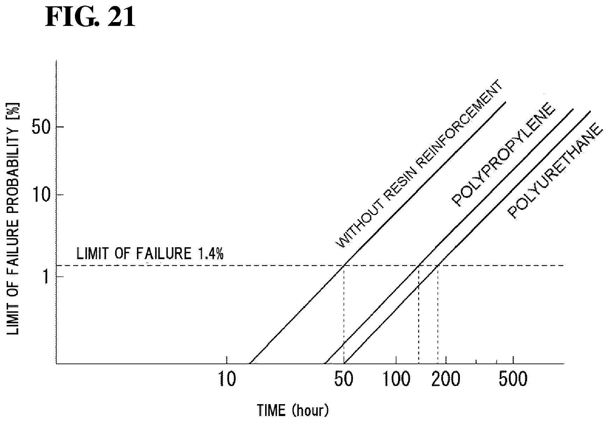

With an increase in the operation time, failure was generated in projecting portions of pleats, and failure points gradually increase. A lifetime estimation was performed by the Weibull plot on the basis of the time at which such failure was generated and the number of failures. Figure 21 is a graph in which the lifetime of a filter is estimated by the Weibull plot. The Weibull plot is generally used in the quality assurance, the lifetime estimation, and the like. In this experiment, the number of failures that increases with the operation time is plotted to estimate the lifetime with a certain slope where the vertical axis indicates the failure probability (= the number of failure pleats/the total number of pleats), and the horizontal axis indicates the time. Herein, the term "failure" is used as the same meaning as "breakage". According to previous experiments conducted by the inventors, about 1.4% of the failure probability is a limit in the ballast water treatment. Specifically, it was found that a significant leakage of plankton contained in seawater occurs. Referring to Fig. 21, in the filter without reinforcement, the time at which the failure becomes 1.4% is 50 hours. On the other hand, in the filter that is reinforced by being impregnated with polyurethane, the time is about 180 hour. In the filter that is reinforced by being impregnated with polypropylene, the time is about 140 hours. These results show that the lifetime is significantly extended by the reinforcement. In the cases where other resin materials are used, the effect of the resin-reinforcing structure is similarly obtained, though the degree of the effect may be different. It should be noted that, herein, the absolute values of the lifetime do not have a particular meaning but are used only for the comparison of the effects in the same experiment. That is, the failure lifetime of a pleated filter varies depending on the shape of the pleated filter, such as the size and the number of folds, and conditions for a filtration operation, such as a flow rate.

### (EXPERIMENTAL EXAMPLE 4)

An experiment for confirming the effects of the presence or absence of application of a polyurethane resin and reinforcement of mountains was performed. A pleated filter used was a single pleated filter having an outer diameter of 350 mm, a length in the axial direction of 200 mm, a pleats depth of 70 mm, and a number of pleats of 210. Other structures and conditions are the same as those in Experimental Example 3. A soft polyurethane resin and a hard polyurethane resin were applied onto mountains or valleys as shown in Sample 1 to Sample 7 in Table 1. The application was performed with a roller over the entire height of the pleated filter between fixing members. The polyurethane resins (PU) used were as described below. Herein, in the effect of preventing breakage, the term "soft" used for a polyurethane refers to a Shore hardness of 20A to 60A (in accordance with rubber-elastomer (JIS K6253) standard measurement time: 3 seconds for vulcanized rubber, and 15 seconds for elastomer) in terms of hardness. As the reinforcement of the mountains of all pleats, a member-reinforcing structure with reinforcing sheets was formed. The reinforcing sheets used were described below. The reinforcing sheets are arranged on the back side of the mountains and along the mountains, as illustrated in Figs. 9 to 13. The length of each of the reinforcing sheets is about 200 mm, which is substantially the same as the length of the pleated filter in the axial direction. The upper and lower ends of the reinforcing sheets are fixed by the fixing members as in the filter base. The reinforcing sheets each have a width (in a direction perpendicular to the axis) of 60 mm. Note that the manufacturers, the model names, and the like of the materials are not limited thereto. The same types of alternative products may be used within a range where the advantages of the present embodiment are achieved.
Reinforcing sheet: Polypropylene mesh sheet (trade name: TRICAL NET SN-598, manufactured by Takiron Co., Ltd.), mesh pitch: 4.8 mm x 4.8 mm, thickness: 1.5 mm (warp 1.5 mm, weft 1.2 mm)
Soft polyurethane resin: A main agent SA-7073A and a hardening agent SA-7502B manufactured by Sanyu Rec Co., Ltd. were mixed at a ratio of 23:100. Hardness: 23A (at 23°C)
Hard polyurethane resin: A main agent SA-7073A and a hardening agent SA-7068B manufactured by Sanyu Rec Co., Ltd. were mixed at a ratio of 1:2. Hardness: 90A (at 23°C)

**[Table 1]**

| | Mountain | Valley | Number of failures |
|---|---|---|---|
| Sample 4-1 | Soft PU application | Soft PU application | 5/30 |
| Sample 4-2 | Soft PU application | Hard PU application | 5/30 |
| Sample 4-3 | Soft PU application | No application | 9/30 |
| Sample 4-4 | Hard PU application | Soft PU application | 11/30 |
| Sample 4-5 | Hard PU application | Hard PU application | 11/30 |
| Sample 4-6 | Hard PU application | No application | 15/30 |
| Sample 4-7 | No application | No application | 25/30 |

Two hundred ten folds of the pleated filter cartridge were divided into groups each including 30 folds. The groups have the structures of Sample 4-1 to Sample 4-7. The effect due to the difference in structure can be confirmed by performing a filtration operation at one time using this cartridge. The filtration operation was performed for 50 hours under accelerated test conditions in which the flow rate was higher than that in usual conditions. After the filtration operation, the number of failures of mountains was examined. In Sample 4-7, which had no resin-reinforcing structure in mountains and valleys, the failure was observed in 25 folds out of 30 folds. In contrast, in Sample 4-1 to Sample 4-6, whose mountains were reinforced with a resin, the effect of a resin impregnation could be confirmed. In addition, the numbers of failures in Sample 4-1 to Sample 4-3, in which the soft PU having a low hardness was used as the resin, were smaller than those in Sample 4-4 to Sample 4-6, in which the hard PU was used. These results show that a high breakage-preventing effect is obtained in Sample 4-1 to Sample 4-3. Furthermore, the comparison of Samples 4-1 and 4-2 with Sample 4-3 and the comparison of Samples 4-4 and 4-5 with Sample 4-6 show that a failure-preventing effect in mountains is also increased by combining the application of a resin to valleys.

### (EXPERIMENTAL EXAMPLE 5)

Another experiment for confirming a breakage-preventing effect obtained by applying a polyurethane resin was performed. A pleated filter used was a single pleated filter having an outer diameter of 810 mm, a length in the axial direction of 380 mm, a pleats depth of 70 mm, and a number of pleats of 517. Other structures and conditions are the same as those in Experimental Example 3. The same soft polyurethane resin as that used in Experimental Example 4 was applied onto all mountains. The application was performed over the entire height of the pleated filter between fixing members. As the reinforcement of the mountains of all pleats, a member-reinforcing structure with reinforcing sheets was formed. The reinforcing sheets used were the same as those in Experimental Example 4 except that the length was changed to about 380 mm so as to adjust to the length of the pleated filter.

Three types of reinforcement of valleys were performed as described below, and Sample 5-1 to Sample 5-3 were prepared. The failure lifetime of the samples was compared. In Sample 5-1 to Sample 5-3, only the resin-reinforcing structures of the valleys were different. The application of the soft polyurethane (PU) and the reinforcing structure with reinforcing sheets in mountains are common. In Sample 5-1, only 1/3 of the center of each of the valleys in the height direction was reinforced by being impregnated with the soft PU. In Sample 5-2, the valleys were impregnated with the soft PU over the entire height thereof. In Sample 5-3, the valleys were not impregnated with a resin. The resin used was the same as the resin applied onto the mountains.

Table 2 shows the results. The comparison of Samples 5-1 and 5-2 with Sample 5-3 shows that the breakage lifetime (hours) can be significantly improved by further providing a resin-reinforcing structure in valleys. The breakage can be prevented more effectively by employing the reinforcement in the valleys in addition to the reinforcing structures of the mountains. Since breakage of a valley tends to occur near the center of the valley, a significant effect is obtained by reinforcing a portion near the center (1/3 of the center in the experiment) by impregnation (Sample 5-1). However, in this case, a non-application portion becomes relatively weak, and breakage occurs. Accordingly, by applying the soft polyurethane over the entire height of valleys as in Sample 5-2, breakage of a valley can be particularly effectively prevented.

**[Table 2]**

| | Mountain | Valley | Failure lifetime | Broken part |
|---|---|---|---|---|
| Sample 5-1 | Application of soft PU over entire height | Application of soft PU to only 1/3 of center | 115 hours | Non-application portion of valley |
| Sample 5-2 | Application of soft PU over entire height | Application of soft PU over entire height | 210 hours | Center of valley |
| Sample 5-3 | Application of soft PU over entire height | No application | 60 hours | Center of valley |

### (EXPERIMENTAL EXAMPLE 6)

In order to confirm the effect obtained by reinforcing sheets, filtration was performed with the same device as that used in Experimental Example 5. The filter base and the reinforcing-sheet material that were used were the same as those in Experimental Example 5. The reinforcing sheet was cut into strips. The strips were attached, as independent reinforcing sheets, to the back side of mountains of the filter by the method illustrated in Figs. 9 to 13. When the reinforcing sheets were not used, after 50 hours of the filtration operation, a failure occurred in mountains of the filter. In contrast, when the reinforcing sheets were provided, a failure did not occur until 155 hours in the filtration under the same conditions. Also in the cases where other resins such as polyethylene, polyethylene terephthalate, and polyvinyl chloride are used as the reinforcing sheets, a similar reinforcing effect is obtained, though the failure lifetime may be different to a certain degree.

### Industrial Applicability

According to the pleated filter of the present invention, a decrease in the performance due to clogging does not occur, and the pleated filter has good durability. Accordingly, the pleated filter of the present invention can be suitable for use in preliminary filtration treatment for removing foreign matter, contaminants, and microbes in water in the cases of seawater desalination, the use of brackish water/seawater for purposes such as ballast water, or the treatment of water such as sewage water, human sewage, industrial waste water, or the like. Furthermore, the pleated filter is suitable for the treatment of water having a high suspended substance/high SS (suspended solid) content and a concentration treatment, and thus can also be used in the field of collection of valuable recyclable materials, for example, in the field of food.

## Claims

1. A pleated filter cartridge comprising a pleated filter that includes a filter base having folds that repeatedly form mountains and valleys and having a tubular shape whose axial direction is a ridge line direction of the folds; and fixing members disposed on an upper bottom portion and a lower bottom portion of the pleated filter, wherein the pleated filter includes a reinforcing structure for folds in the mountains which are projecting portions projecting toward the outside of the tubular shape, and the reinforcing structure includes both a resin-reinforcing structure including, as a reinforcing body, a resin that covers a surface of the base in the folds or a resin that is allowed to permeate in the base in the folds, and a member-reinforcing structure in which reinforcing members provided separately from the filter base are disposed so as to extend along the folds.

2. The pleated filter cartridge according to Claim 1, wherein the resin has a Shore hardness of 20A to 60A (in accordance with rubber-elastomer (JIS K6253), standard measurement time: 3 seconds for vulcanized rubber, and 15 seconds for elastomer) or a Shore hardness of 5D to 30D (plastic (JIS K7215), a maximum value of an indicator is read within one second).

3. The pleated filter cartridge according to Claim 1 or 2, wherein the resin is a polyurethane.

4. The pleated filter cartridge according to any one of Claims 1 to 3, wherein the reinforcing members are each a sheet-like body formed of any resin selected from the group consisting of polypropylene, polyethylene, polyamides, polyesters, and polyvinyl chloride.

5. The pleated filter cartridge according to any one of Claims 1 to 4, wherein the reinforcing members are fixed by the fixing members alone, and no other members that connect reinforcing members adjacent to each other are provided.

6. A pleated filter cartridge comprising a pleated filter that includes a filter base having folds that repeatedly form mountains and valleys and having a tubular shape whose axial direction is a ridge line direction of the folds; and fixing members disposed on an upper bottom portion and a lower bottom portion of the pleated filter, wherein the pleated filter includes a reinforcing structure for folds in the mountains which are projecting portions projecting toward the outside of the tubular shape, and
the reinforcing structure is a resin-reinforcing structure including, as a reinforcing body, a resin that covers a surface of the base in the folds or a resin that is allowed to permeate in the base in the folds.

7. The pleated filter cartridge according to Claim 6, wherein the resin has a Shore hardness of 20A to 60A (in accordance with rubber-elastomer (JIS K6253), standard measurement time: 3 seconds for vulcanized rubber, and 15 seconds for elastomer) or a Shore hardness of 5D to 30D (plastic (JIS K7215), a maximum value of an indicator is read within one second).

8. The pleated filter cartridge according to Claim 6 or 7, wherein the resin is a polyurethane.

9. A pleated filter cartridge comprising a pleated filter that includes a filter base having folds that repeatedly form mountains and valleys and having a tubular shape whose axial direction is a ridge line direction of the folds; and fixing members disposed on an upper bottom portion and a lower bottom portion of the pleated filter, wherein the pleated filter includes a reinforcing structure for folds in the mountains which are projecting portions projecting toward the outside of the tubular shape, the reinforcing structure is a member-reinforcing structure in which reinforcing members provided separately from the filter base are disposed on the back side of the folds in the mountains so as to extend along the folds, and
the reinforcing members are fixed by the fixing members alone, and no other members that connect reinforcing members adjacent to each other are provided.

10. The pleated filter cartridge according to any one of Claims 1 to 9, further comprising, in folds that form the valleys which are projecting portions projecting toward the inside of the tubular shape, a resin-reinforcing structure including, as a reinforcing body, a resin that covers a surface of the base or a resin that is allowed to permeate in the base.

11. The pleated filter cartridge according to any one of Claims 1 to 10, wherein the filter base is a polyethylene terephthalate non-woven cloth.

12. A ballast water treatment device comprising the pleated filter cartridge according to any one of Claims 1 to 11, the pleated filter cartridge being used for filtration,
a top surface of a cylinder and a bottom surface of the cylinder of the pleated filter each being sealed in a watertight manner, the pleated filter being rotatably held about a cylindrical axis;
an untreated-water nozzle that ejects untreated water toward an outer circumferential surface of the pleated filter;
a case that includes an outer tubular portion provided so as to surround the pleated filter and including a nozzle opening of the untreated-water nozzle therein;
a filtered-water flow path that leads filtered water having passed through the pleated filter from the inside of the cylinder of the pleated filter cartridge to the outside of the case; and
a discharge flow path that discharges discharge water that is not filtered by the pleated filter to the outside of the case.

13. A method for treating ballast water, the method comprising installing the ballast water treatment device according to Claim 12 in a hull; using, as untreated water, seawater taken from the outside of the hull; further applying a sterilization treatment to filtered water treated by the ballast water treatment device; and subsequently storing the resulting water in the hull as ballast water.
